# EUROPÄISCHE PATENTSCHRIFT

(11) **EP 2 759 810 B1**
(45) Veröffentlichungstag und Bekanntmachung des Hinweises auf die Patenterteilung: **26.06.2019**
(21) Anmeldenummer: 14000011.8
(22) Anmeldetag: 03.01.2014
(51) Int. Cl.: G01F 1/66, G01F 15/18, G01H 3/00

(54) **Baueinheit aus einem Ultraschallwandler und einem Wandlerhalter**
Assembly of an ultrasonic transducer and a transducer holder
Assemblage d'un transducteur à ultrasons et un support de transducteur

(30) Priorität: 28.01.2013 DE 102013001352
(43) Veröffentlichungstag der Anmeldung: 30.07.2014
(73) Patentinhaber: Krohne AG, 4019 Basel (CH)
(72) Erfinder: van Klooster, Jeroen Martin, 4005 GN Tiel (NL); Huijzer, Arie, 3363 BS Sliedrecht (NL)
(74) Vertreter: Gesthuysen Patent- und Rechtsanwälte

(56) Entgegenhaltungen:
- EP-A2- 1 316 780
- DE-A1- 4 443 415
- DE-A1- 19 601 570
- JP-A- 2001 159 551
- JP-A- 2012 007 975

## Beschreibung

Die Erfindung betrifft eine Baueinheit aus einem Ultraschallwandler und einem Wandlerhalter, wobei der Ultraschallwandler ein Wandlergehäuse und ein Wandlerelement aufweist, wobei das Wandlergehäuse ein Ultraschallfenster, ein Gehäuserohr und einen Gehäuseflansch aufweist, wobei das Wandlerelement zum Senden oder Empfangen von Ultraschallwellen ausgebildet und entweder nahe dem Ultraschallfenster des Wandlergehäuses oder fern vom Ultraschallfenster des Wandlergehäuses vorgesehen ist, wobei der Wandlerhalter einen Halterflansch aufweist und wobei der Gehäuseflansch des Wandlergehäuses mit Hilfe eines Gegenflansches unter Zwischenschaltung eines Dichtungsrings gegen den Halterflansch des Wandlerhalters gespannt ist. Patentschriften JP 2012-7975 A, JP JP 2001-159551 A und DE 44 43 415 A1 offenbaren jeweils eine Baueinheit aus einem Ultraschallwandler und einem Wandlerhalter.

In der Industrie kommt der Mess-, Steuer-, Regel- und Automatisierungstechnik besondere Bedeutung zu, Das gilt insbesondere für die Messtechnik, die Grundlage der Steuer-, Regel- und Automatisierungstechnik ist. Ein bedeutender Bereich der Messtechnik ist die Durchflussmesstechnik (vgl. die umfassende Darstellung von Prof. Dr. sc. nat. Otto Fiedler "Strömungs- und Durchflußmeßtechnik, R. Oldenbourg Verlag München 101992), Für die Durchflussmesstechnik sind von besonderer Bedeutung (siehe "Strömungs- und Durchflußmeßtechnik", aaO) die Durchflussmessung nach mechanischen Wirkprinzipien, insbesondere Schwebekörperdurchflussmessgeräte und Coriolisdurchflussmessgeräte, thermische Durchflussmessgeräte, magnetisch-induktive Durchflussmessgeräte sowie Ultraschalldurchflussmessgeräte.

Bei Ultraschalldurchflussmessgeräten wird der Effekt ausgenutzt, dass in einem in einem Messrohr transportierten Medium der Ausbreitungsgeschwindigkeit des Schallsignals die Transportgeschwindigkeit des Mediums überlagert ist, Die gemessene Ausbreitungsgeschwindigkeit des Schallsignals gegenüber dem Messrohr ist also größer als im ruhenden Medium, wenn das Medium in Richtung des Schallsignals transportiert wird, und die Geschwindigkeit des Schallsignals gegenüber dem Messrohr ist geringer als im ruhenden Medium, wenn das Medium entgegengesetzt der Richtung des Schallsignals transportiert wird. Die Laufzeit des Schallsignals zwischen dem Schallsender und dem Schallempfänger - Schallsender und Schallempfänger sind Ultraschallwandler - hängt aufgrund des Mitführeffekts von der Transportgeschwindigkeit des Mediums gegenüber dem Messrohr und damit gegenüber dem Ultraschallwandler, also gegenüber dem Schallsender und dem Schallempfänger ab.

Problematisch bei Ultraschalldurchflussmessgeräten ist, dass die im Ultraschallwandler erzeugten Ultraschallwellen bzw. die vom Ultraschallwandler empfangenen Ultraschallwellen nicht nur von der Sende- und/oder der Empfangsseite des Wandlergehäuses in das umgebende Medium des Ultraschallwandlers übertragen werden, dass die - gesendeten oder empfangenen - Ultraschallwellen auch über das Wandlergehäuse, gegebenenfalls auch über eine Gehäusehalterung, übertragen werden. Das ist nicht nur deshalb problematisch, weil so unter Umständen ein erheblicher Teil der Sendeleistung bzw. der Empfangsleistung "verloren" geht, sondern es ist vielmehr vor allem deshalb problematisch, weil die durch so genanntes Übersprechen auf das Wandlergehäuse übertragenen Ultraschallwellen auch zu einer erheblichen empfangsseitigen Störung führen können. Das liegt daran, dass empfangsseitig beispielsweise nicht unterschieden werden kann, ob die empfangenen Ultraschallwellen über das Medium empfangen worden sind - Nutzsignal - oder über das Wandlergehäuse.

Insbesondere bei der Anwendung von Ultraschalldurchflussmessgeräten zur Messung des Durchflusses von gasförmigen Medien ist der vom Ultraschallwandler in das gasförmige Medium übermittelte Anteil der Schwingungsenergie gegenüber der insgesamt erzeugten Schwingungsenergie sehr gering, so dass das Problem des Übersprechens hier besonders gravierend ist.

Im Stand der Technik sind verschiedene Maßnahmen bekannt, um das zuvor erläuterte Übersprechen, also das Entstehen von Gehäusewellen zu reduzieren. Einige Maßnahmen befassen sich mit der Aufgabe, derartige Gehäusewellen schon in der Entstehung zu vermeiden. Dazu zählen beispielsweise bestimmte Ausgestaltungen des Ultraschallfensters des Wandlergehäuses hinsichtlich einer besonders guten Impedanzanpassung zur Maximierung des transmittierten Energieanteils oder hinsichtlich einer Auslegung des Ultraschallfensters als λ/4-Schicht zur Reduzierung von Reflexionen. Andere Maßnahmen befassen sich damit, bereits entstandene Gehäusewellen an einer Weiterleitung zu hindern, beispielsweise durch fehlangepaßte akustische Impedanzübergänge. Zu der in Rede stehenden Baueinheit gehörende Ultraschallwandler sind durch die deutsche Offenlegungsschrift 10 2008 033 098 und die inhaltsgleiche europäische Offenlegungsschrift 2 148 322 bekannt. Bei diesen Ultraschallwandlern ist eine weitere Maßnahme zur Verhinderung der Übertragung von Gehäusewellen auf das Wandlergehäuse des Ultraschallwandlers dadurch realisiert, dass im zweiten Bereich des Wandlergehäuses ein relativ weiches mechanisches Koppelsystem vorgesehen ist und das Koppelsystem wenigstens zwei schwach gekoppelte, in Ausbreitungsrichtung der Gehäusewellen im wesentlichen hintereinander wirksame mechanische Resonatoren aufweist. Durch die mechanischen Resonatoren ist es zunächst möglich, die von den Ultraschallwellen transportierte Energie lokal zu "fangen", nämlich durch Anregung der mechanischen Resonatoren zu Schwingungen. Mechanische Resonatoren sind üblicherweise als Feder-Masse-Systeme beschreibbar, wobei bei realen Feder-Masse-Systemen die Eigenschaft der Feder - nämlich eine auslenkungsabhängige Kraftwirkung - nicht realisierbar ist, ohne einen - wenn auch sehr kleinen - Beitrag zur Masse des Resonators beizusteuern, genauso wie eine Masse aufgrund ihrer konstruktiven Einbringung in den Resonator auch immer die Federeigenschaft des Feder-Masse-Systems beeinflußt; Feder und Masse sind konstruktiv nicht vollkommen voneinander trennbar.

Durch die serielle Anordnung der zumindest zwei mechanischen Resonatoren in Ausbreitungsrichtung der Gehäusewellen wird erreicht, dass die Gehäusewellen alle Resonatoren durchqueren müssen, um von dem ersten Bereich des Wandlergehäuses zu dem dritten Bereich des Wandlergehäuses zu gelangen und umgekehrt. Durch die schwache Kopplung der beiden Resonatoren wird erreicht, dass die Resonatoren für die Gehäusewellen insgesamt ein größeres Hindernis darstellen, als dies bei stark gekoppelten Resonatoren der Fall ist, selbst wenn diese an sich ansonsten gleiche Schwingungseigenschaften haben. Bei einer starken mechanischen Kopplung überträgt sich die Schwingung eines Resonators praktisch unmittelbar auf den benachbarten Resonator, was bei einer schwachen mechanischen Kopplung nicht der Fall ist, wenngleich auch hier selbstverständlich eine mechanische Wechselwirkung zwischen den benachbarten Resonatoren gegeben ist.

Die der Erfindung zugrunde liegende Aufgabe besteht darin, die eingangs beschriebene Baueinheit aus einem Ultraschallwandler und einem Wandlerhalter in Bezug auf die Verhinderung der Übertragung von Gehäusewellen zu verbessern.

Die erfindungsgemäße Baueinheit, bei der die zuvor hergeleitete und aufgezeigte Aufgabe gelöst ist, ist zunächst und im Wesentlichen dadurch gekennzeichnet, dass zwischen dem Gehäuseflansch des Wandlergehäuses und dem Halterflansch des Wandlerhalters ein Entkopplungsring vorgesehen ist. Vorzugsweise ist zwischen dem Gehäuseflansch des Wandlergehäuses und dem Entkopplungsring ein Dichtungsring vorgesehen.

Bei der beschriebenen erfindungsgemäßen Baueinheit aus einem Ultraschallwandler und einem Wandlerhalter ist die Übertragung von Gehäusewellen gegenüber im Stand der Technik bekannten Baueinheiten der in Rede stehenden Art dadurch verbessert, dass der zusätzlich vorgesehene Entkopplungsring und der weiter zusätzlich vorgesehene weitere Dichtungsring zu einer akustischen Fehlanpassung führen.

Gemäß der Erfindung ist der Entkopplungsring indirekt mit dem Gehäuseflansch des Wandlergehäuses verbunden.

Zur indirekten Verbindung des Entkopplungsrings mit dem Gehäuseflansch des Wandlergehäuses ist ein Gleitring vorgesehen, der fest mit dem Entkopplungsring verbunden ist, zum Beispiel verschweißt oder verschraubt ist.

Im Einzelnen gibt es nun verschiedene Möglichkeiten, die erfindungsgemäße Baueinheit auszugestalten und weiter zu bilden. Dazu wird auf die dem Patentanspruch 1 nach geordneten Patentansprüche und auf das nachfolgend in Verbindung mit den Figuren beschriebene und in den Figuren dargestellte Ausführungsbeispiel verwiesen. In den Figuren zeigen
- Fig. 1: eine im Stand der Technik bekannte Baueinheit aus einem Ultraschallwandler und einem Wandlerhalter,
- Fig. 2: ein bevorzugtes Ausführungsbeispiel einer erfindungsgemäßen Baueinheit aus einem Ultraschallwandler und einem Wandlerhalter und

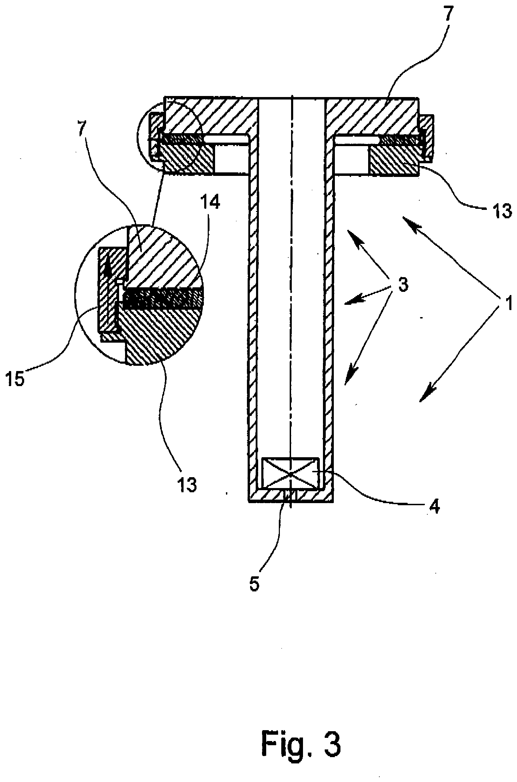

- Fig. 3: ein zu der erfindungsgemäßen Baueinheit nach Fig. 2 gehörender Ultraschallwandler mit einem erfindungsgemäß vorgesehenen Entkopplungsring und einem weiteren Dichtungsring, der vorzugsweise vorhanden ist.

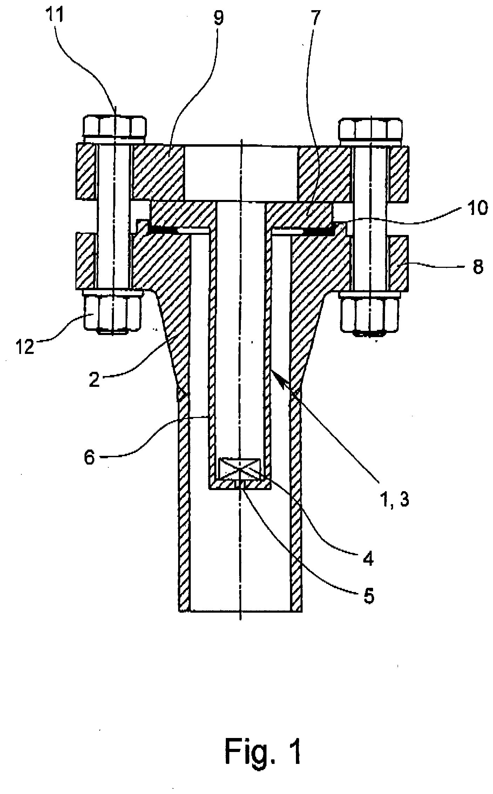

Die Fig. 1 zeigt eine im Stand der Technik bekannte Baueinheit aus einem Ultraschallwandler 1 und einem Wandlerhalter 2. Der Ultraschallwandler 1 weist ein Wandlergehäuse 3 und ein Wandlerelement 4 auf. Das Wandlergehäuse 3 weist ein Ultraschallfenster 5, ein Gehäuserohr 6 und einen Gehäuseflansch 7 auf. Das Wandlerelement 4 ist zum Senden oder Empfangen von Ultraschallwellen ausgebildet und entweder, wie das die Figuren zeigen, nahe dem Ultraschallfenster 5 des Wandlergehäuses vorgesehen, oder fern vom Ultraschallfenster des Wandlergehäuses vorgesehen, wie das zum Beispiel die deutsche Patentschrift 198 12 458 und die inhaltsgleiche europäische Patentschrift 1 046 886 zeigen.

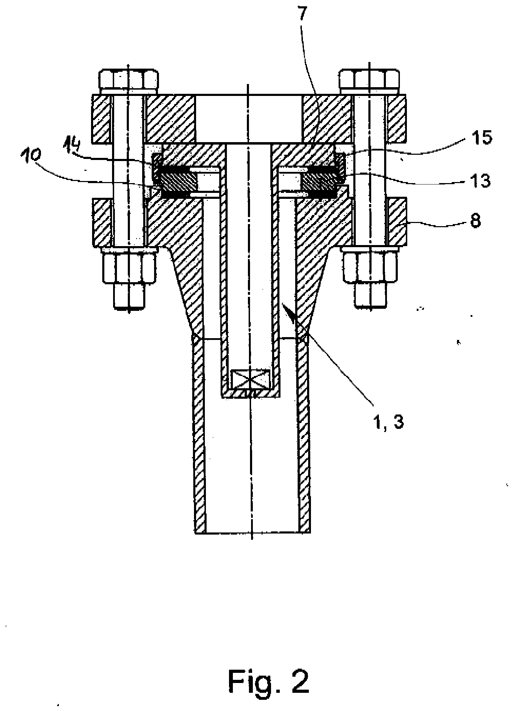

Für die zum Stand der Technik gehörende, in Fig. 1 dargestellte Baueinheit wie für die erfindungsgemäße, in Fig. 2 dargestellte Baueinheit gilt, dass der Wandlerhalter 2 einen Halterflansch 8 aufweist und der Gehäuseflansch 7 des Wandlergehäuses 3 mit Hilfe eines Gegenflansches 9 unter Zwischenschaltung eines Dichtungsrings 10 gegen den Halterflansch 8 des Wandlerhalters 2 gespannt ist, und zwar mit Hilfe von Spannschrauben 11 und Gegenmuttern 12,

Erfindungsgemäß ist, wie das die Fig. 2 zeigt, zwischen dem Gehäuseflansch 7 des Wandlergehäuses 3 und dem Halterflansch 8 des Wandlerhalters 2 ein Entkopplungsring 13 vorgesehen. Im dargestellten Ausführungsbeispiel ist zusätzlich zwischen dem Gehäuseflansch 7 des Wandlergehäuses 3 und dem Entkopplungsring 13 ein Dichtungsring 14 vorgesehen.

Für das in Fig. 2 dargestellte Ausführungsbeispiel einer erfindungsgemäßen Baueinheit gilt des Weiteren, dass der Entkopplungsring 13 indirekt mit dem Gehäuseflansch 7 des Wandlergehäuses 3 verbunden ist. Im Einzelnen ist zur indirekten Verbindung des Entkopplungsrings 13 mit dem Gehäuseflansch 7 des Wandlergehäuses ein Gleitring 15 vorgesehen und ist der Gleitring 15 fest mit dem Entkopplungsring 13 verbunden, zum Beispiel verschweißt oder verschraubt.

Bei dem beschriebenen und in Fig. 2 dargestellten bevorzugten Ausführungsbeispiel einer erfindungsgemäßen Baueinheit kann der Ultraschallwandler 1 mit dem Entkopplungsring 13, dem Dichtungsring 14 und dem Gleitring 15 wie ein zum Stand der Technik gehörender Ultraschallwandler in einen Wandlerhalter eingesetzt werden.

## Patentansprüche

1. Baueinheit aus einem Ultraschallwandler (1) und einem Wandlerhalter (2), wobei der Ultraschallwandler (1) ein Wandlergehäuse (3) und ein Wandlerelement (4) aufweist, wobei das Wandlergehäuse (3) ein Ultraschallfenster (5), ein Gehäuserohr (6) und einen Gehäuseflansch (7) aufweist, wobei das Wandlerelement (4) entweder nahe dem Ultraschallfenster (5) des Wandlergehäuses oder fern vom Ultraschallfenster des Wandlergehäuses vorgesehen ist, wobei der Wandlerhalter (2) einen Halterflansch (8) aufweist und wobei der Gehäuseflansch (7) des Wandlergehäuses (3) mit Hilfe eines Gegenflansches (9) unter Zwischenschaltung eines Dichtungsrings (10) gegen den Halterflansch (8) des Wandlerhalters (2) gespannt ist, wobei zwischen dem Gehäuseflansch (7) des Wandlergehäuses (3) und dem Halterflansch (8) des Wandlerhalters (2) ein Entkopplungsring (13) vorgesehen ist,
**dadurch gekennzeichnet,**
**dass** der Entkopplungsring (13) indirekt mit dem Gehäuseflansch (7) des Wandlergehäuses (3) verbunden ist und dass zur indirekten Verbindung des Entkopplungsrings (13) mit dem Gehäuseflansch (7) des Wandlergehäuses (3) ein Gleitring (15) vorgesehen ist und der Gleitring (15) fest mit dem Entkopplungsring (13) verbunden ist.

2. Baueinheit nach Anspruch 1, **dadurch gekennzeichnet, dass** zwischen dem Gehäuseflansch (7) des Wandlergehäuses (3) und dem Entkopplungsring (13) ein Dichtungsring (14) vorgesehen ist.

3. Baueinheit nach Anspruch 1 oder 2, **dadurch gekennzeichnet, dass** der Gleitring (15) mit dem Entkopplungsring (13) verschweißt oder verschraubt ist.

## Claims

1. Unit comprising an ultrasonic transducer (1) and a transducer holder (2), wherein the ultrasonic transducer (1) comprises a transducer housing (3) and a transducer element (4), wherein the transducer housing (3) comprises an ultrasonic window (5), a housing tube (6) and a housing flange (7), wherein the transducer element (4) is provided either near the ultrasonic window (5) of the transducer housing or far from the ultrasonic window of the transducer housing, wherein the transducer holder (2) has a holder flange (8), and wherein the housing flange (7) of the transducer housing (3) is tensioned against the holder flange (8) of the transducer holder (2) with the help of an opposing flange (9) with a gasket (10) connected in between, wherein a decoupling ring (13) is provided between the housing flange (7) of the transducer housing (3) and the holder flange (8) of the transducer holder (2),
**characterized in**
**that** the decoupling ring (13) is indirectly connected to the housing flange (7) of the transducer housing (3) and that a slide ring (15) is provided for the indirect connection of the decoupling ring (13) to the housing flange (7) of the transducer housing (3) and the slide ring (15) is firmly connected to the decoupling ring (13).

2. Unit according to claim 1, **characterized in that** a gasket (14) is provided between the housing flange (7) of the transducer housing (3) and the decoupling ring (13).

3. Unit according to claim 1 or 2, **characterized in that** the slide ring (15) is welded or screwed to the decoupling ring (13).

## Revendications

1. Assemblage d'un transducteur à ultrasons (1) et d'un support de transducteur (2), le transducteur à ultrasons (1) présentant un boîtier de transducteur (3) et un élément de transducteur (4), le boîtier de transducteur (3) présentant une fenêtre à ultrasons (5), un tube de boîtier (6) et une bride de boîtier (7), l'élément de transducteur (4) étant soit prévu à proximité de la fenêtre à ultrasons (5) du boîtier de transducteur soit à distance de la fenêtre à ultrasons du boîtier de transducteur, le support de transducteur (2) présentant une bride de retenue (8) et la bride de boîtier (7) du boîtier de transducteur (3) étant serrée à l'aide d'une bride conjuguée (9) en interposant une bague d'étanchéité (10) contre la bride de retenue (8) du support de transducteur (2), une bague de désaccouplement (13) étant prévue entre la bride de boîtier (7) du boîtier de transducteur (3) et la bride de retenue (8) du support de transducteur (2),
**caractérisé en ce que**
la bague de désaccouplement (13) est connectée indirectement à la bride de boîtier (7) du boîtier de transducteur (3) et **en ce que** pour la connexion indirecte de la bague de désaccouplement (13) à la bride de boîtier (7) du boîtier de transducteur (3), il est prévu une bague de glissement (15) et la bague de glissement (15) est connectée fixement à la bague de désaccouplement (13).

2. Assemblage selon la revendication 1, **caractérisé en ce qu'**entre la bride de boîtier (7) du boîtier de transducteur (3) et la bague de désaccouplement (13) est prévue une bague d'étanchéité (14).

3. Assemblage selon la revendication 1 ou 2, **caractérisé en ce que** la bague de glissement (15) est soudée ou vissée à la bague de désaccouplement (13) .
